# EUROPEAN PATENT SPECIFICATION

(11) **EP 1 833 709 B1**
(45) Date of publication and mention of the grant of the patent: **15.02.2012**
(21) Application number: 05815547.4
(22) Date of filing: 09.12.2005
(51) Int. Cl.: B60T 17/22, B60T 8/88

(54) **RETARDER SLIP CONTROL**
RETARDER-SCHLUPFSTEUERUNG
COMMANDE DE GLISSADE PAR RALENTISSEUR

(30) Priority: 30.12.2004 SE 0403226
(43) Date of publication of application: 19.09.2007
(73) Proprietor: VOLVO LASTVAGNAR AB, 405 08 Göteborg (SE)
(72) Inventor: SABELSTRÖM, Mats, S-427 37 Billdal (SE); LINGMAN, Peter, S-430 63 Hindås (SE)
(74) Representative: Fröhling, Werner Otto
(86) International application number: PCT/SE2005/001879
(87) International publication number: WO 2006/071173

(56) References cited:
- DE-A1- 19 822 859
- JP-A- 08 040 246
- JP-A- 2002 274 349
- US-A- 4 235 320
- US-A- 4 480 728
- US-A- 6 062 658
- US-B1- 6 695 416

## Description

Generally, the present invention relates to improvements in drivability and safety in motor vehicles having foundation brakes acting on at least some of the wheels of the vehicle and auxiliary brakes acting on the driven wheels of the vehicle. In particular, the invention relates to a control system and a method of applying and controlling the retardation force between the braking devices.

### Background of the invention

In connection with heavy-duty vehicles, such as trucks, buses and construction-site machinery, it is well known to provide auxiliary brakes as a supplement to the service brakes of the vehicle, in the following designated foundation brakes and to increase the available braking power. This is typically done in order to increase the life time of the foundation brakes and to increase the available braking force, since these are otherwise exposed to significant wear due to the heavy loads on the vehicle, especially when driving down steep gradients, the vehicle has to be slowed down before developing a too high speed.

Documents relating to brake blending systems for conjoint control of auxiliary brakes and foundation brakes are known. An example is US6695416 relating to method controls a vehicle brake system having a service brake and a retarder in a mutually coordinated manner. The retarder is activated during each braking operation and is controlled as a function of the driver's braking desire as well as of driving condition values, road condition values and operating conditions of the vehicle.

An other example is US6062658 relating to vehicle having a duty brake and a retarder, the actual braking moment produced by the sustained-action brake, as well as the braking command of the driver, are taken into consideration in the electrically controlled adjustment of the duty brake.

It is also known to differentiate between what are known as primary and secondary auxiliary brakes in a vehicle. Primary and secondary refer to the positioning of the auxiliary brake before or after the main gearbox of the vehicle and its clutch device. Examples of primary auxiliary brakes are ISGs (Integrated Starters and Generators) and retarders. A retarder is usually of the hydrodynamic retarder or electromagnetic retarder type. These are arranged between the engine and the main gearbox.

A primary auxiliary brake can also consist of various types of engine brakes, for example a compression brake or exhaust-gas brake. The braking energy in a compression brake and an exhaust-gas brake is converted mainly to heat, which to a great extent is dissipated via the cooling system of the engine, but it should be noted that a considerable part (roughly 40% of the braking energy) leaves the vehicle via the exhaust pipe through the gas exchange of the engine.

A secondary auxiliary brake, which is arranged somewhere after the main gearbox of the vehicle and its clutch device, usually consists of a retarder of hydrodynamic or electromagnetic type. As the secondary auxiliary brake is arranged after the clutch device of the vehicle, it can brake the vehicle even when the clutch is disengaged or when the gearbox is in neutral position. Such a secondary auxiliary brake will be referred to as a retarder in the following.

Typically, a primary auxiliary brake, such as an engine brake produces brake torque at the whole speed range of the vehicle whereas a retarder only produces brake torque at medium and high vehicle speeds. The nature of the auxiliary brakes implies that they only produce brake torque on the driven axle(s) of the vehicle whereas the foundation brakes produce brake torque on one or more axles. At low speeds, and therefore low gear, the brake torque from an engine brake is very high on the drive axle.

In an existing system the auxiliary brakes of a vehicle are often the only brakes used as long as the needed braking effect is below a maximum retardation force of the auxiliary brakes, i.e. as long as *f*_{brake}, ₐᵤₓ>*f*_{needed}.

However, it has been experienced that a sudden loss or significant reduction of the braking effect from the auxiliary brakes may occur in certain situations, which can lead to dangerous and uncontrollable situations, which again potentially can result in an accident. One such situation is locking of the drive axle(s), which may occur if the vehicle is used under conditions where the friction force between the road surface and the tyres of the drive axle(s) is too low for grip. This is most often the case when driving under wet or icy conditions. Also, if the load on the drive axle(s) is low, e.g. if the vehicle does not carry any payload, this can also contribute to reduced friction force between road and tyres. A significant reduction of the braking effect is to be understood as a reduction in braking effect that the driver of a vehicle experiences as a loss of breaking effect, that is a large and sudden reduction of braking effect. This does not necessarily mean a technically seen total loss of braking effect, but a substantial reduction of braking effect.

Another situation is when the primary auxiliary brake releases at a predetermined rotational speed (rpm) of the engine, in order to avoid engine stop at low vehicle speeds. Aside from the potentially dangerous aspect of that situation (due to the loss of braking force), it may also simply feel uncomfortable to the driver when this sudden "slip" of the brakes occurs.

### Disclosure of the invention

In case one of the situations mentioned above occur, it will be highly advantageous if the sudden loss or significant reduction of braking effect from the auxiliary brakes automatically can be compensated for, by use of the foundation brakes, i.e. applying an equalising retardation force to these.

Therefore, it is an object of the present invention to provide a motor vehicle or a vehicle combination with a control system that is capable of applying braking effect to the foundation brakes when the auxiliary braking effect is lost or reduced significantly.

Another object of the present invention is to provide a method to avoid the "slip" in the braking effect when decelerating a vehicle as mentioned above.

These and other objects are achieved by the invention as described in the following, wherein the term driveline of the vehicle is to be construed as consisting of the engine, transmission, propeller shaft, final gear, drive axle and driven wheels of the vehicle. Hence, in a first aspect, the invention relates to a control system for applying retardation force to foundation brakes in a motor vehicle characterised in having;
- means for detecting an occurrence of an incident having influence on the braking effect provided by auxiliary brakes and providing indication signal(s) in response thereto, and
- means for receiving said indication signal(s) and for applying retardation force to the foundation brakes in response thereto.

The incidents that may occur will normally be one or more of the following:
- that one or more driving axle(s) lock(s), and/or
- that the rotational speed (rpm) of the propeller shaft or the engine's crankshaft falls below a predetermined minimum value.

The driving axle(s) will lock in case the driven wheels skid, which may be caused by changes in, or the state of, the surrounding physical situation. This may be the weather situation, particularly under cold and/or wet conditions, making the road surface slippery or icy. But also the load on the drive axle has influence on the possibility for providing sufficient retardation force to the wheels of the drive axle. If the vehicle is not carrying any payload, its weight is relatively low, which may result in bad drivability or skidding due to the insufficient road grip, particularly under the conditions mentioned.

As mentioned above the primary auxiliary brake automatically disengages at a predetermined rotational speed (rpm) of the engine, in order to avoid engine stop at low vehicle speeds, which thus is an incident having influence on the braking effect provided by the auxiliary brakes.

Such a control system may preferably comprise a number of detecting means comprising various sensors. The sensors are preferably applied to detect e.g. locking of any drive axle(s), load on any drive axle(s), rotational speed of the propeller shaft, rotational speed of the engine's crankshaft, wheel speed, vehicle speed, brake pressure, deceleration request, vehicle weight and/or driving resistance etc. The sensors may e.g. be inductive sensors, temperature sensors and/or pressure sensors. Parameters detected or monitored by the sensors may be communicated as indication signals to the control system via suitable wiring or wireless means. The control system may further comprise an embedded computer to receive, handle and process the indication signals.

The sensors may be positioned in suitable places on the vehicle's chassis or in connection with any of the mentioned parts of the driveline, e.g. the drive axle(s) or the final gear.

Sensors positioned adjacent to the driven wheels may be the sensors (or at least the same type) of a traditional anti-lock brake system. An anti-lock brake system may be incorporated in the control system if suitable for detecting if the wheels and thus the drive axle(s) lock(s).

Communication through the wiring or wireless means may be effected using digital signals and/or analogue signals. This is also the case for all communication between the various parts described below. In some cases, a data bus may preferably be used, e.g. if parts are to communicate at high transmission rates and/or with large quantities of data. In other cases, an analogue signal may be preferable, e.g. for an analogue sensor. The digital communication may be both parallel and serial.

The embedded computer of the control system may preferably comprise a data-processing unit for calculating an optimal retardation force to be applied to the foundation brakes on basis of the received indication signals. The computer may preferably further comprise means so as to process and to structure data from the sensors and to calculate how to activate and apply the foundation brakes in the most efficient manner. Also, means for delivering a response signal containing data about the calculated, optimal retardation force to be applied may preferably be included.

The embedded computer of the control system may preferably further calculate the optimal retardation force on the basis of any one or all of the parameter(s) from a group comprising: velocity of the vehicle, torque on the drive shaft, locking of any drive axle(s), load on any drive axle(s), rotational speed of the propeller shaft, rotational speed of the engine's crankshaft, wheel velocity, brake pressure, deceleration request, vehicle weight and/or driving resistance. However, other possible indication signals from the various sensors may also be processed in order to calculate and apply the required retardation force.

It will be particularly advantageous if the foundation brakes of the vehicle are activated within a predefined period of time, just before the retardation force from the auxiliary brakes is lost or reduced significantly. Preferably, this may be done by providing a signal to the embedded computer of the control system indicating locking (or soon to lock) of the drive axle(s) and/or that the rpm of the engine falls (or soon will fall) below a predetermined minimum value.

The control system may further comprise means for disengaging the auxiliary brakes when an occurrence of an incident having influence on the braking effect of the auxiliary brakes has been detected. Such means may be a simple analogue or digital switch or any suitable relay.

The means for detecting the rotational speed of the engine may preferably comprise a simple revolution counter positioned in connection with the engine's crankshaft.

When the foundation brakes are applied, the braking force of the foundation brakes may be regulated so that the deceleration of the vehicle is unchanged. At a time when the indication signals indicate that the auxiliary brakes can be re-activated, the braking effect of the foundation brakes may be decreased at a rate so that the total braking effect of the vehicle remains substantially constant.

The retardation force may preferably be applied by the control system to the foundation brakes so as to act on one or more or on all the wheels of the vehicle or vehicle combination in order to obtain the most efficient braking. It may thus be applied as a force per axle or per individual wheel.

In a second aspect, the invention relates to a motor vehicle with an internal combustion engine and a transmission, comprising at least foundation brakes and auxiliary brakes, where the foundation brakes act directly on at least some of the wheels of the vehicle and where the auxiliary brakes act on the driving wheels of the vehicle, said auxiliary brakes interacting with a drive axle of a driveline of the vehicle before and/or after a clutch device of a transmission, characterised in that a control system is adapted to apply retardation force to the foundation brakes when the system detects a loss or significant reduction of the retardation force that can be applied by the auxiliary brakes.

In a motor vehicle according to the invention, the auxiliary brakes may preferably comprise both a primary auxiliary brake and a secondary auxiliary brake. The primary auxiliary brake may comprise an engine brake or an engine retarder positioned between the engine and the transmission of the driveline, or possibly both kinds in combination. The engine brake may be a compression brake or an exhaust-gas brake. The engine retarder may e.g. be a hydrodynamic, a pneumatic or an electromagnetic retarder.

In a motor vehicle according to the invention, the secondary auxiliary brake may be a retarder. The retarder typically applies the retardation force to the propeller shaft between the gearbox and the final gear of the driveline, by hydrodynamic, pneumatic or electromagnetic braking means.

If the rotational speed (revolutions per minute, rpm) of the engine fall below a predetermined value, the primary auxiliary brake normally disengages in order to avoid an undesirable engine stop. A simple revolution counter as known in the art may preferably monitor the rotational speed of the engine. The revolution counter may be positioned in connection with the engine's crankshaft and/or in connection with the propeller shaft of the vehicle.

In a motor vehicle according to the invention, retardation force may preferably be applied by the control system to the foundation brakes so as to act on one or more or on all the wheels of the vehicle or vehicle combination in order to obtain the most efficient braking. It may thus be applied as a force per axle or per individual wheel or in any other suitable configuration.

The control system of the motor vehicle according to the second aspect of the invention may preferably be a control system as according to the first aspect.

In a third aspect, the present invention relates to a method of applying retardation force to foundation brakes in a motor vehicle comprising;
- detecting an occurrence of an incident having influence on the braking effect provided by auxiliary brakes,
- providing (an) indication signal(s) in response thereto, and
- applying the retardation force to the foundation brakes.

Preferably, the appliance of the retardation force according to the invention happens automatically. However, alternatively or additionally, it may also be possible to apply the retardation force manually by the driver when he/she receives an indication of an occurrence of an incident.

The method according to the invention may preferably further comprise the step of disengaging of the auxiliary brakes subsequent to the step of detecting.

The method according to the invention may preferably further comprise the step of, subsequent to the step of providing the signal, calculating an optimal retardation force to be applied to the foundation brakes on basis of the received indication signal(s). In addition, the method comprises the step of delivering the calculated, optimal retardation force to be applied to the foundation brakes.

When the foundation brakes are activated in order to compensate for the loss or significant reduction of braking effect of the auxiliary brakes, it is particularly advantageous if this activation is initiated before or exactly when the auxiliary brakes disengage. This will eliminate the uncomfortable "slip" of braking effect since there is not the usual period of time before the foundation brakes are engaged.

According to the method of the present invention the calculated required braking effect may be applied to the foundation brakes either per axle or per individual wheel. The appliance may in either case be applied in order to obtain the most efficient braking of the vehicle or vehicle combination.

### Brief description of the figures

- Fig. 1: is a schematic plan view of the driveline of a motor vehicle showing its involved components,
- Fig. 2: is a diagram showing the functions of a control system according to the invention, and
- Fig. 3: is an example of a schematic display of the braking torque effecting from the primary auxiliary brake device seen relative to the rotational speed of the engine.

### Description of the invention

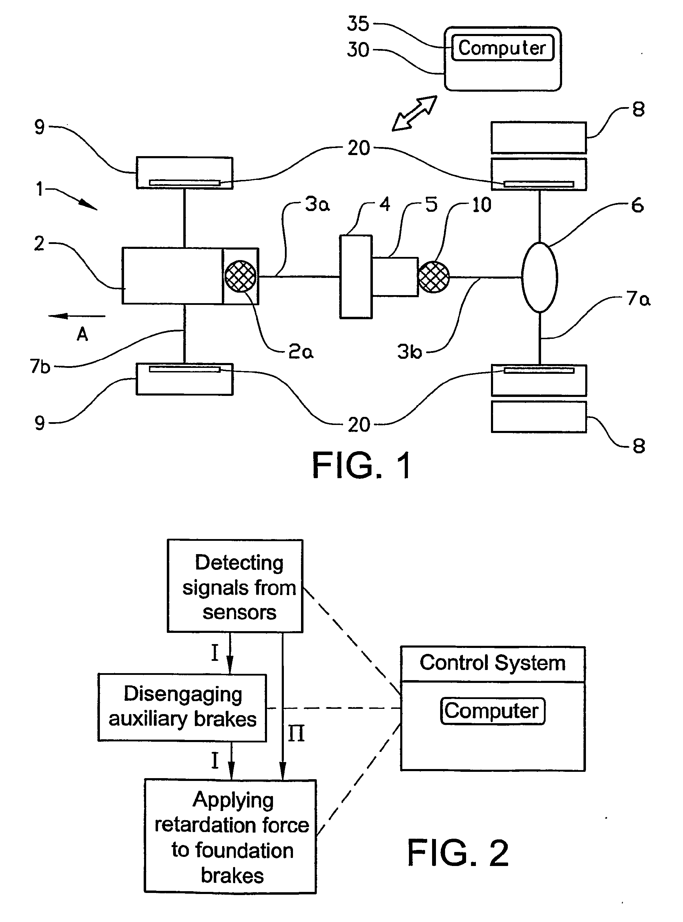

Figure 1 schematically shows the driveline 1 of a typical heavy-duty motor vehicle pointing towards a normal driving direction as indicated by the arrow A. The driveline 1 comprises an internal combustion engine 2, a crankshaft 3a and a propeller shaft 3b, a transmission consisting of a clutch device 4 and a gearbox 5, a final gear (or differential) 6, a drive axle 7a and a front axle 7b, non-driven wheels 9 and driving wheels 8. The clutch 4 can e.g. be a dry disk clutch or a hydraulic clutch connected to a gearbox 5 in a manner known to the skilled person. The gearbox 5 may be a manual or automatic gearbox.

The gearbox 5 is coupled together with the propeller shaft 3b, which, via a final gear/differential 6 and drive axle 7 known to the skilled person, drives the driving wheels 8 of the vehicle. In this example, a vehicle with only one front and rear axle is shown, but vehicles with more front and rear axles, driven and/or non-driven, are of course also possible.

The driving wheels 8 of the vehicle are provided with foundation brakes 20, typically of the friction type e.g. a disk brake or a drum brake. The other wheels of the vehicle are also provided with corresponding foundation brakes. The designation foundation brakes 20 include both the brakes, which brake the driving wheels 8 and the brakes, which brake the non-driven wheels 9. The foundation brakes are controlled by pneumatic means in a manner known to the skilled person. There is advantageously a foundation brake on each wheel. However, it is also possible to control the braking force on each wheel or axle individually in order to minimise wear on the brakes.

A primary auxiliary brake 2a, for example an engine brake, a hydraulic (oil or water), pneumatic or electromagnetic retarder, is arranged on the crankshaft 3a in or between the engine 2 and the clutch 4. A break in the driveline 1 by disengagement of the clutch 4, causes the primary auxiliary brake 2a to lose its braking effect on the driving wheels 8 of the vehicle.

A secondary auxiliary brake, the retarder 10, is mounted in interacting relationship with the propeller shaft 3b behind the rear edge of the gearbox 5, i.e. between the clutch 4 and the driving wheels 8. The retarder can be a hydraulic or pneumatic retarder, an electromagnetic brake or any other known type and it is operated and controlled in a known way.

Figure 2 is a schematic diagram illustrating the main steps of the method according to the invention. When the need for appliance of retardation force to the foundation brakes is detected on basis of the received indication signals from the sensors, the control system according to the present invention will send a disengagement signal to the auxiliary brake device and a signal to the means for appliance of retardation force containing data about the calculated, optimal retardation force to be applied. This is represented by the route designated I.

However, it might be that the auxiliary brakes do not have to be disengaged before the foundation brakes become activated as an incident can be detected in advance. In this case the foundation brakes are activated as soon as the incident is indicated to avoid or minimise the drop of braking force. When an incident occurs, the system may therefore use both the auxiliary brakes and the foundation brakes for braking. This is represented by the route designated II.

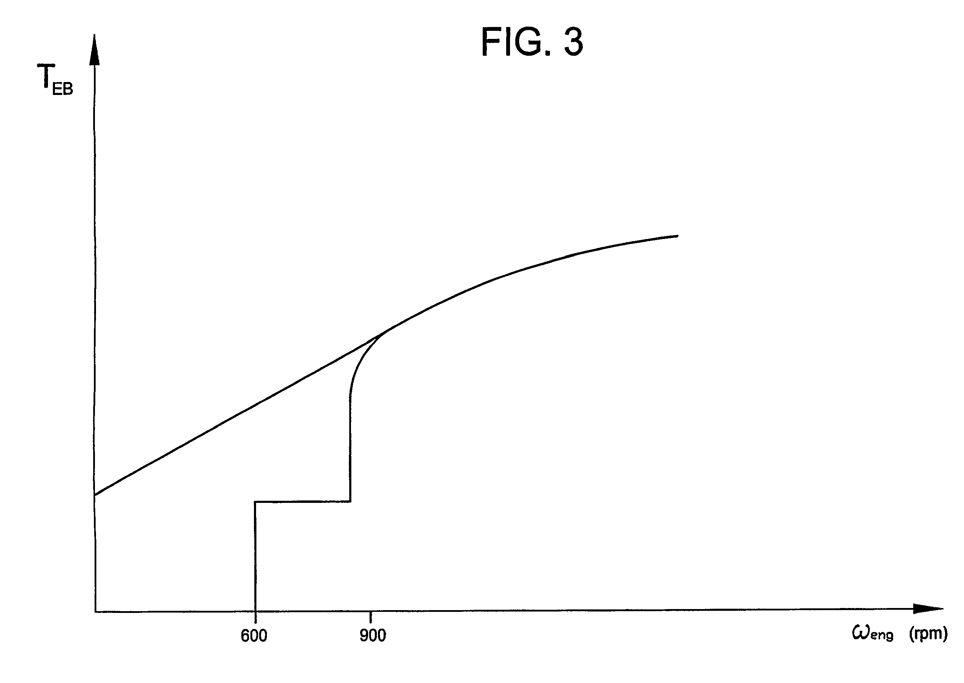

Figure 3 is a schematic drawing intended to illustrate one of the advantages of the invention. The figure shows a co-ordinate system having a first (x) axis representing the rotational speed (rpm) of the engine of a motor vehicle according to the invention, indicated by ω_{eng}, and a second (y) axis representing the relative size of the torque of the primary auxiliary brake, T_{EB}, i.e. the engine brake alone or in combination with other primary retarders.

As is represented by the fully drawn line in the figure, the torque (and thereby braking effect) supplied by the primary auxiliary brake is "lost" when the brake is disengaged at a predetermined rotational speed, e.g. around 900 rpm, said disengagement is normally provided in order to avoid an engine stop. Before the disengagement takes place, the curve exhibits a smooth falling gradient corresponding to a theoretical uniform deceleration. However, when the primary auxiliary brake is disengaged, the torque is lost, which constitutes not only an uncomfortable "slip" in the braking of the vehicle but also a potentially hazardous situation. From this point on, the torque is at a substantially constant level originating from the internal friction provided in the engine and/or other primary retarder parts. At some point the engine will eventually come to a standstill, e.g. around 600 rpm at which the torque level obviously drops to zero.

The dotted line in the figure represents the theoretical most desirable behaviour of the torque curve in order to obtain the smoothest braking of the vehicle, thus eliminating the "slip" in retardation force. However, this would only be the case if the primary auxiliary brake could be engaged over the full range of the engine's rpm. As described above, this is not possible since the primary auxiliary brake has to be disengaged to prevent the engine from stopping.

In the method according to the third aspect of the invention, the "slip" in retardation force is eliminated by applying retardation force to the foundation brakes, thus "imitating" the theoretical most desirable behaviour of the torque curve as described above. Hence, the method according to the invention provides improved drivability and increased safety and braking comfort of the vehicle.

## Claims

1. A control system (30) for applying retardation force to foundation brakes (20) in a motor vehicle or vehicle combination wherein the retardation force applied to the foundation brakes (20) acts on all the wheels (8, 9) of the vehicle and auxiliary brakes device acting on the driven wheels of the vehicle
**characterised in** having;
- means for detecting an occurrence of an incident having influence on the braking effect provided by auxiliary brakes and providing indication signal(s) in response thereto and means (35) for disengaging the auxiliary brakes when said occurrence has been detected, and
means (35) for receiving said indication signal(s) and for applying retardation force to the foundation brakes in response thereto,
- wherein said incident comprises at least:
a) locking of one or more drive axles (7a) on the vehicle, and/or
b) that the rotational speed of the engine falls below a predetermined minimum value,
- and wherein said control system is arranged to regulate the braking force applied by the foundation brakes to compensate for the loss of the braking effect of the auxiliary brakes.

2. A control system (30) according to any of claims 1, further comprising
- means (35) for calculating an optimal retardation force to be applied to the foundation brakes (20) on basis of the received signal(s) and for delivering a signal containing data about the calculated, optimal retardation force to be applied to the foundation brakes (20).

3. A control system (30) according to any of claims 1 - 2, wherein the means for detecting comprise sensors positioned adjacent to the driveline (1) of the vehicle, such as adjacent to the engine (2), to the transmission (4, 5), to the propeller shaft (3b), to the final gear (6), to the drive axle (7a) and/or to the driven wheels (8) of the vehicle.

4. A control system (30) according to claim 4, wherein the sensors comprise sensors of an anti-lock brake system positioned adjacent to the driven wheels (8).

5. A control system (30) according to any of claims 1 - 4, wherein the means for detecting comprises a revolution counter counting the engine revolutions and/or the propeller shaft revolutions.

6. A control system (30) according to any of claims 1 - 5, wherein the retardation force applied to the foundation brakes (20) acts on one or more or all the wheels (8, 9) of the vehicle.

7. A control system (30) according to any of claims 1 - 6, wherein the optimal retardation force is calculated on the basis of any one or all of the parameter(s) from a group comprising:
velocity of the vehicle, torque on the drive shaft, locking of any drive axle(s), load on any drive axle(s), rotational speed of the propeller shaft, rotational speed of the engine's crankshaft, wheel velocity, brake pressure, deceleration request, vehicle weight and/or driving resistance.

8. A motor vehicle with an internal combustion engine (2) and a transmission (4, 5), comprising at least foundation brakes (20) and auxiliary brakes (2a, 10), where the foundation brakes (20) act directly on all the wheels (8, 9) of the vehicle and where the auxiliary brakes (2a, 10) act on the driving wheels (8) of the vehicle, said auxiliary brakes (2a, 10) interacting with a drive axle (7a) of a driveline (1) of the vehicle before and/or after a clutch device (4) of a transmission,
**characterised in that**
a control system (30) is adapted to detect if:
- one or more drive axles (7a) on the vehicle locks or tend to lock, and/or
the rotational speed of the engine falls below a predetermined minimum value, the control system (30) is adapted to apply retardation force to the foundation brakes (20) when the system detects a loss or significant reduction in the retardation force that can be applied by the auxiliary brakes (2a, 10), and
that said control system is arranged to regulate the braking force applied by the foundation brakes to compensate for the loss of the braking effect of the auxiliary brakes.

9. A motor vehicle according to claim 8, wherein the auxiliary brakes (2a, 10) comprises a primary auxiliary brake comprising
- an engine brake and/or
- an engine retarder (2a) positioned between the engine (2) and the transmission (4, 5) of the driveline (1),
and/or a secondary auxiliary brake comprising
- a retarder (10) positioned between the transmission (4, 5) and the final gear (6) of the driveline (1).

10. A motor vehicle according to any of claims 8 - 9, wherein the control system (30) comprises the control system according to any of claims 1 - 7.

11. A method of applying retardation force to foundation brakes (20) in a motor vehicle; wherein the retardation force applied to the foundation brakes (20) acts on all the wheels (8, 9) of the vehicle and auxiliary brakes device acting on the driven wheels of the vehicle, said method **characterised by** the steps of:
- detecting an occurrence of an incident having influence on the braking effect provided by auxiliary brakes (2a, 10),
wherein said incident comprises at least:
a) locking of one or more drive axles (7a) on the vehicle, and/or
b) that the rotational speed of the engine falls below a predetermined minimum value,
- providing (an) indication signal(s) in response thereto, and
- applying the retardation force to the foundation brakes to compensate for the loss of the braking effect of the auxiliary brakes.

12. A method according to claim 11 further comprising, subsequent to the step of detecting;
- disengaging the auxiliary brakes.

13. A method according to claim 11 or 12 further comprising, subsequent to the step of providing the signal(s),
- calculating an optimal retardation force to be applied to the foundation brakes on basis of the received signal(s), and
- delivering a signal containing data about the calculated, optimal retardation force to be applied to the foundation brakes (20).

14. A method according to claim 12 or 13, wherein the appliance of retardation force to the foundation brakes (20) is initiated before or exactly when the auxiliary brakes (2a, 10) are disengaged.

15. A method according to any of the claims 11 - 14, wherein the retardation force is applied to the foundation brakes (20) per axle (7a, 7b) or per individual wheel (8, 9).

## Patentansprüche

1. Steuersystem (30) zur Aufbringung einer Verzögerungskraft auf Betriebsbremsen (20) in einem Kraftfahrzeug oder einer Fahrzeugkombination, wobei die auf die Betriebsbremsen (20) aufgebrachte Verzögerungskraft auf alle Räder (8, 9) des Fahrzeugs wirkt, und auf Hilfsbremsen, die auf die Antriebsräder des Fahrzeugs wirken, **gekennzeichnet durch**
- Einrichtungen zur Erfassung eines Auftretens eines Ereignisses, das einen Einfluss auf die **durch** die Hilfsbremsen bereit gestellte Bremswirkung hat, und Bereitstellung eines Anzeigesignals oder von Anzeigesignalen in Ansprechung hierauf, und Einrichtungen (35) für ein Entkoppeln der Hilfsbremsen, wenn das Auftreten erfasst wurde, und
- Einrichtungen (35) für einen Empfang des Anzeigesignals oder der Anzeigesignale und zur Aufbringung einer Verzögerungskraft auf die Betriebsbremsen in Ansprechung hierauf,
- wobei das Ereignis wenigstens umfasst:
a) Sperren einer oder mehrerer Antriebsachsen (7a) an dem Fahrzeug und/oder
b) dass die Drehzahl des Motors unter einen vorherbestimmten Minimalwert fällt,
- und wobei das Steuersystem so konfiguriert ist, dass es die **durch** die Betriebsbremsen aufgebrachte Bremskraft zur Kompensierung des Verlusts der Bremswirkung der Hilfsbremsen regelt.

2. Steuersystem (30) nach Anspruch 1, außerdem umfassend
- Einrichtungen (35) zur Berechnung einer auf die Betriebsbremsen (20) aufzubringenden, optimalen Verzögerungskraft auf der Basis des empfangenen Signals oder der empfangenen Signale und zur Lieferung eines Signals, das Daten über die berechnete optimale Verzögerungskraft enthält, die auf die Betriebsbremsen (20) aufzubringen ist.

3. Steuersystem (30) nach einem der Ansprüche 1 bis 2, wobei die Einrichtungen zur Erfassung Sensoren umfassen, die angrenzend an den Antriebsstrang (1) des Fahrzeugs angeordnet sind, wie zum Beispiel angrenzend an den Motor (2), an das Getriebe (4, 5), an die Kardanwelle (3b), an das letzte Getriebe (6), an die Antriebsachse (7a) und/oder an die Antriebsräder (8) des Fahrzeugs.

4. Steuersystem (30) nach Anspruch 4, bei dem die Sensoren Sensoren eines Antiblockierbremssystems umfassen, die angrenzend an die Antriebsräder (8) angeordnet sind.

5. Steuersystem (30) nach einem der Ansprüche 1 bis 4, bei dem die Einrichtung zur Erfassung einen Drehzahlzähler umfasst, der die Motordrehzahlen und/oder die Kardanwellendrehzahlen zählt.

6. Steuersystem (30) nach einem der Ansprüche 1 bis 5, bei dem die auf die Betriebsbremsen (20) aufgebrachte Verzögerungskraft auf eines oder mehrere oder alle Räder (8, 9) des Fahrzeugs wirkt.

7. Steuersystem (30) nach einem der Ansprüche 1 bis 6, bei dem die optimale Verzögerungskraft auf der Basis irgendeines oder aller Parameter aus einer Gruppe berechnet wird, die umfasst: Fahrzeuggeschwindigkeit, Drehmoment an der Antriebswelle, Sperrung irgendeiner Antriebsachse, Last an irgendeiner Antriebsachse, Drehzahl der Kardanwelle, Drehzahl der Motorkurbelwelle, Radgeschwindigkeit, Bremsdruck, Verzögerungsanforderung, Fahrzeuggewicht und/oder Fahrzeugwiderstand.

8. Kraftfahrzeug mit einem Verbrennungsmotor (2) und einem Getriebe (4, 5), das wenigstens Betriebsbremsen (20) und Hilfsbremsen (2a, 10) umfasst, wobei die Betriebsbremsen (20) direkt auf alle Räder (8, 9) des Fahrzeugs wirken und wobei die Hilfsbremsen (2a, 10) auf die Antriebsräder (8) des Fahrzeugs wirken, wobei die Hilfsbremsen (2a, 10) mit einer Antriebsachse (7a) des Antriebsstrangs (1) des Fahrzeugs vor und/oder nach einer Kupplungsvorrichtung (4) eines Getriebes zusammenwirken,
**dadurch gekennzeichnet, dass**
ein Steuersystem (30) so ausgelegt ist, dass es erfasst, ob
- eine oder mehrere Antriebsachsen (7a) des Fahrzeugs sperren oder dazu neigen zu sperren, und/oder
- die Drehzahl des Motors unterhalb eines vorherbestimmten Minimalwerts fällt,
das Steuersystem (30) so ausgelegt ist, dass es eine Verzögerungskraft auf die Betriebsbremsen (20) aufbringt, wenn das System einen Verlust oder eine deutliche Reduzierung der Verzögerungskraft erfasst, die durch die Hilfsbremsen (2a, 10) aufgebracht werden kann, und
das Steuersystem so konfiguriert ist, dass es die durch die Betriebsbremsen aufgebrachte Bremskraft zur Kompensierung des Verlusts der Bremswirkung der Hilfsbremsen regelt.

9. Kraftfahrzeug nach Anspruch 8, bei dem die Hilfsbremsen (2a, 10) eine Primärhilfsbremse, die
- eine Motorbremse und/oder
- einen Motorretarder (2a) umfasst, der zwischen dem Motor (2) und dem Getriebe (4, 5) des Antriebsstrangs (1) angeordnet ist,
und/oder eine Sekundärhilfsbremse umfassen, die
- einen Retarder (10) umfasst, der zwischen dem Getriebe (4, 5) und dem Endgetriebe (6) des Antriebsstrangs (1) angeordnet ist.

10. Kraftfahrzeug nach einem der Ansprüche 8 bis 9, bei dem das Steuersystem (30) das Steuersystem nach einem der Ansprüche 1 bis 7 umfasst.

11. Verfahren zur Aufbringung einer Verzögerungskraft auf Betriebsbremsen (20) in einem Kraftfahrzeug, wobei die auf die Betriebsbremsen (20) aufgebrachte Verzögerungskraft auf alle Räder (8, 9) des Fahrzeugs wirkt, und auf Hilfsbremsen, die auf die Antriebsräder des Fahrzeugs wirken, wobei das Verfahren durch die Schritte gekennzeichnet ist:
- Erfassung eines Auftretens eines Ereignisses, das einen Einfluss auf die durch die Hilfsbremsen (2a, 10) bereit gestellte Bremswirkung hat, wobei das Ereignis wenigstens umfasst:
a) Sperren einer oder mehrerer Antriebsachsen (7a) an dem Fahrzeug und/oder
b) dass die Drehzahl des Motors unter einen vorherbestimmten Minimalwert fällt,
- Bereitstellen eines Anzeigesignals oder von Anzeigesignalen in Ansprechung hierauf, und
- Aufbringung der Verzögerungskraft auf die Betriebsbremsen, um den Verlust der Bremswirkung der Hilfsbremsen zu kompensieren.

12. Verfahren nach Anspruch 11, das außerdem nach dem Schritt der Erfassung das Entkoppeln der Hilfsbremsen umfasst.

13. Verfahren nach Anspruch 11 oder 12, das außerdem nach dem Schritt der Bereitstellung des Signals/der Signale
- die Berechnung einer optimalen Verzögerungskraft, die auf die Betriebsbremsen aufzubringen ist, auf der Basis des empfangenen Signals/der empfangenen Signale, und
- die Lieferung eines Signals umfasst, das Daten über die berechnete optimale Verzögerungskraft enthält, die auf die Betriebsbremsen (20) aufzubringen ist.

14. Verfahren nach Anspruch 12 oder 13, bei dem die Aufbringung der Verzögerungskraft auf die Betriebsbremsen (20) bevor oder exakt dann initiiert wird, wenn die Hilfsbremsen (2A, 10) entkoppelt werden.

15. Verfahren nach einem der Ansprüche 11 bis 14, bei dem die Verzögerungskraft auf die Betriebsbremse (20) pro Achse (7a, 7b) oder pro einzelnes Rad (8, 9) aufgebracht wird.

## Revendications

1. Système de commande (30) pour appliquer une force de décélération à des freins de base (20) dans un véhicule à moteur ou un ensemble de véhicules, dans lequel la force de décélération appliquée aux freins de base (20) agit sur toutes les roues (8, 9) du véhicule et sur le dispositif de freinage auxiliaire agissant sur les roues entraînées du véhicule
**caractérisé en ce qu'**il comprend :
- un moyen pour détecter une survenue d'une situation ayant une influence sur l'effet de freinage fourni par les freins auxiliaires et pour fournir, en réponse, un signal ou des signaux d'indication et un moyen (35) pour débrayer les freins auxiliaires lorsque ladite survenue a été détectée, et
un moyen (35) pour recevoir ledit signal ou lesdits signaux d'indication et pour appliquer, en réponse, une force de décélération aux freins de base,
- dans lequel ladite situation comprend au moins :
a) un blocage d'un ou plusieurs essieux moteurs (7a) du véhicule, et/ou
b) le fait que la vitesse de rotation du moteur descend en dessous d'une valeur minimum prédéterminée,
et dans lequel ledit système de commande est agencé pour réguler la force de freinage appliquée par les freins de base pour compenser la perte de l'effet de freinage des freins auxiliaires.

2. Système de commande (30) selon la revendication 1, comprenant en outre
- un moyen (35) pour calculer une force de décélération optimale à appliquer aux freins de base (20) sur la base du signal ou des signaux reçu(s) et pour fournir un signal contenant des données sur la force de décélération optimale calculée à appliquer aux freins de base (20).

3. Système de commande (30) selon les revendications 1 à 2, dans lequel le moyen de détection comprend des capteurs agencés de manière adjacente à la chaîne cinématique (1) du véhicule, comme de manière adjacente au moteur (2), à la transmission (4, 5), à l'arbre moteur (3b), au pont arrière (6), à l'essieu moteur (7a) et/ou aux roues entraînées (8) du véhicule.

4. Système de commande (30) selon la revendication 4, dans lequel les capteurs comprennent des capteurs d'un système de freinage anti-blocage agencé de manière adjacente aux roues entraînées (8).

5. Système de commande (30) selon l'une quelconque des revendications 1 à 4, dans lequel le moyen détection comprend un compte-tour comptant les tours du moteur et/ou les tours de l'arbre moteur.

6. Système de commande (30) selon l'une quelconque des revendications 1 à 5, dans lequel la force de décélération appliquée aux freins de base (20) agit sur une ou plusieurs ou toutes les roues (8, 9) du véhicule.

7. Système de commande (30) selon l'une quelconque des revendications 1 à 6, dans lequel la force de décélération optimale est calculée sur la base de l'un quelconque ou de tous les paramètres provenant d'un groupe comprenant : vitesse du véhicule, couple exercé sur l'arbre moteur, blocage de l'un quelconque des essieux moteurs, charge sur l'un quelconque des essieux moteurs, vitesse de rotation de l'arbre moteur, vitesse de rotation du vilebrequin moteur, vitesse des roues, pression de freinage, demande de décélération, poids du véhicule et/ou résistance à l'avancement.

8. Véhicule à moteur comprenant un moteur à combustion interne (2) et une transmission (4, 5), comprenant au moins des freins de base (20) et des freins auxiliaires (2a, 10), où les freins de base (20) agissent directement sur toutes les roues (8, 9) du véhicule et où les freins auxiliaires (2a, 10) agissent sur les roues motrices (8) du véhicule, lesdits freins auxiliaires (2a, 10) interagissant avec un essieu moteur (7a) d'une chaîne cinématique (1) du véhicule avant et/ou après un dispositif d'embrayage (4) d'une transmission,
**caractérisé en ce que**
un système de commande (30) convient pour détecter si :
- un ou plusieurs essieux moteurs (7a) du véhicule se bloquent ou ont tendance à se bloquer, et/ou
la vitesse de rotation du moteur descend en dessous d'une valeur minimum prédéterminée, le système de commande (30) convient pour appliquer une force de décélération aux freins de base (20) lorsque le système détecte une perte ou une réduction significative de la force de décélération qui peut être appliquée aux freins auxiliaires (2a, 10), et
ledit système de commande est agencé pour réguler la force de freinage appliquée aux freins de base afin de compenser la perte de l'effet de freinage des freins auxiliaires.

9. Véhicule à moteur selon la revendication 8, dans lequel les freins auxiliaires (2a, 10) comprennent un frein auxiliaire primaire comprenant
- un frein ralentisseur et/ou
- un ralentisseur sur moteur (2a) agencé entre le moteur (2) et la transmission (4, 5) de la chaîne cinématique (1),
et/ou un frein auxiliaire secondaire comprenant
- un ralentisseur (10) agencé entre la transmission (4, 5) et le pont arrière (6) de la chaîne cinématique (1).

10. Véhicule à moteur selon l'une quelconque des revendications 8 à 9, dans lequel le système de commande (30) comprend le système de commande selon l'une quelconque des revendications 1 à 7.

11. Procédé d'application d'une force de décélération à des freins de base (20) d'un véhicule à moteur ; dans lequel la force de décélération appliquée aux freins de base (20) agit sur toutes les roues (8, 9) du véhicule et le dispositif de freinage auxiliaire agissant sur les roues entraînées du véhicule, ledit procédé étant **caractérisé par** les étapes suivantes consistant à :
- détecter une survenue d'une situation ayant une influence sur l'effet de freinage fourni par les freins auxiliaires (2a, 10),
ladite situation comprenant au moins :
a) un blocage d'un ou plusieurs essieux moteurs (7a) du véhicule, et/ou
b) le fait que la vitesse de rotation du moteur descend en dessous d'une valeur minimum prédéterminée,
- fournir, en réponse, un signal ou des signaux d'indication, et
- appliquer la force de décélération aux freins de base pour compenser la perte de l'effet de freinage des freins auxiliaires.

12. Procédé selon la revendication 11, comprenant en outre, après l'étape de détection, l'étape consistant à :
- débrayer les freins auxiliaires.

13. Procédé selon la revendication 11 ou 12, comprenant en outre, après l'étape de fourniture du signal ou des signaux, les étapes consistant à
- calculer une force de décélération optimale à appliquer aux freins de base sur la base du signal ou des signaux reçu(s), et
- fournir un signal contenant des données sur la force de décélération optimale calculée à appliquer aux freins de base (20).

14. Procédé selon la revendication 12 ou 13, dans lequel l'application d'une force de décélération aux freins de base (20) est commencée avant ou exactement lorsque les freins auxiliaires (2a, 10) sont débrayés.

15. Procédé selon l'une quelconque des revendications 11 à 14, dans lequel la force de décélération est appliquée aux freins de base (20) par essieu (7a, 7b) ou par roue individuelle (8, 9).
